# EUROPEAN PATENT SPECIFICATION

(11) **EP 4 361 005 B1**
(45) Date of publication and mention of the grant of the patent: **28.01.2026**
(21) Application number: 22204436.4
(22) Date of filing: 28.10.2022
(51) Int. Cl.: B60P 3/06, B62D 33/04, B62D 63/06

(54) **TRAILER FOR CARGO TRANSPORTATION ON ROAD**
ANHÄNGER FÜR DEN FRACHTTRANSPORT AUF DER STRASSE
REMORQUE POUR LE TRANSPORT DE MARCHANDISES SUR ROUTE

(43) Date of publication of application: 01.05.2024
(73) Proprietor: North Grade AB, 919 32 ÅSELE (SE)
(72) Inventor: Kaczynski, Lucas, 262 91 Ängelholm (SE)
(74) Representative: AWA Sweden AB

(56) References cited:
- EP-B1- 1 964 716

## Description

### Field of invention

The invention relates to trailers for cargo transportation on road.

### Technical Background

Trailers for cargo transportation on road are often used to transport vehicles such as snowmobiles. The trailers typically comprise a base structure which is supported by wheels, a cover structure having a front wall section, a rear wall section, side wall sections, and a roof section, and being supported by the base structure. The cover structure is typically pivotable connected to the base structure and during transport the cover structure is locked to the base structure. In order to be able to gain access to the interior of the trailer, the cover structure must be unlocked and lifted by the user.

Often, vehicles such as snowmobiles operate in cold and harsh weather conditions. Snowmobiles typically have combustion engines which produces large amounts of heat when being used. Even when the engine has been switched off by a user, the heat is sustained for some time. When the snowmobile is loaded into the trailer and is transported on road, the engine of the snowmobile still runs hot. The heat released from the snowmobile loaded into the trailer might cause snow accumulated on the snowmobile during use to melt which may subsequently freeze the cover structure shut. This impedes lifting the cover structure and makes it difficult to gain access to the interior of the trailer.

There is hence a need for a trailer for cargo transportation on road which addresses this issue.

EP 1 964 716 B1 relates to a vehicle trailer according to the preamble of claim 1.

### Summary of invention

In view of that stated above, the object of the present invention is to at least partly overcome above-identified limitations of the prior art.

It is also an object of the invention to provide a trailer for cargo transportation on road which trailer mitigates problems associated with the formation of melt water from snow-laden cargo loaded on the trailer.

To achieve at least one of the above objects and also other objects that will be evident from the following description, a trailer having the features defined in claim 1 is provided according to the present invention. Preferred embodiments of the device will be evident from the dependent claims.

More specifically, there is provided according to an aspect of the present invention a trailer for cargo transportation on road comprising,
a base structure supported by wheels and defining a loading surface,
a cover structure supported by the base structure and defining a space above the loading surface,
wherein the cover structure comprises a front wall section facing an intended travel direction of the trailer,
wherein the front wall section is provided with at least one inlet opening forming an air inlet to the space,
wherein a deflector member is mounted on an inside surface of the front wall section, the deflector member being configured to deflect an airflow entering the space via the at least one inlet opening in response to moving the trailer in the intended travel direction.

In the description to follow, the front wall section will be described as being faced towards an *"intended travel direction".* Unless nothing else is explicitly given, the term *"intended travel direction"* is to be understood as the direction in which the trailer moves during transportation.

An advantage with the inventive configuration is that the at least one inlet opening forming an air inlet to the space being arranged in the front wall section allows for an airflow to enter the space when the trailer is traveling in the intended travel direction. By arranging the at least one inlet in the front wall section, an enhanced ventilation is provided which may efficiently dissipate heat from cargo loaded on the trailer, such as from an engine of a snowmobile, when the trailer is in motion. As a consequence, melting of snow accumulated on the cargo may be prevented, or at least reduced, thereby reducing the risk for the cover structure to subsequently freeze shut.

The deflector member is configured to deflect an airflow entering the space via the at least one inlet opening when the trailer is moving in the intended travel direction. The trailer is therefore provided with means for intentionally directing an airflow entering the space via the at least one inlet opening towards the space whilst ensuring that dirt, moisture and road salt are at least partly blocked by the deflector member. The deflector member facilitates an enhanced ventilation in the space whilst at least partly keeping dirt, moisture and road salt from entering the space. Hence, the deflector member facilitates in keeping the inside of the trailer and the cargo loaded thereon clean.

According to some embodiments, the trailer further comprises a rear section being pivotable connected to the base structure, the rear section being movably arranged between a transportation position and a loading position in which the rear section forms a ramp giving access to the space.

In the description to follow, the rear wall section will be described as being movably arranged between a *"transportation position"* and a *"loading position". A* respective free outer edge of each of the respective wall sections defines a free outer perimeter of an opening of the cover structure being configured to be supported by the base structure such that each respective free outer edge abuts the base structure. Unless nothing else is explicitly given, the term *"transportation position"* is to be understood as a position where a major portion of the free outer perimeter of the opening abuts the base structure hence forming an at least partly, preferably fully, enclosed housing hence limiting access to the space so as to prevent a snowmobile to be either loaded into or from the space. Further, unless nothing else is explicitly given, the term "loading position" is to be understood as a position where a major portion of the free outer perimeter of the opening has been released from the base structure hence giving access to the space so as to allow a snowmobile to be either loaded into or from the space.

An advantage with this design is that the rear wall section being configured to form a ramp in the loading position, provides the capability to easily and safely load cargo into the space of the trailer from ground level. Accordingly, the rear wall section provides the capability to easily and safely unload cargo from the space of the trailer to ground level.

The trailer is provided with at least one outlet opening forming an air outlet from the space and wherein said at least one outlet opening has an airflow area which is smaller than an airflow area of the at least one inlet opening.

An advantage with this design is that, by the trailer being provided with at least one outlet opening forming an air outlet, it is provided an enhanced ventilation in the space. Since the at least one outlet opening has an airflow area which is smaller than an airflow area of the at least one inlet opening, an overpressure is established in the space during transportation. The established overpressure in the space during transportation ensures that dirt, moisture and road salt is at least partly kept from entering into the space through the at least one outlet opening.

According to some embodiments, the at least one air outlet is formed by gaps between the base structure and the cover structure and/or between wall sections of the cover structure.

An advantage with this design is that by the at least one air outlet is formed between gaps between the base structure and the cover structure and/or between wall sections of the cover structure, the at least one air outlet need not be separately formed during manufacturing and/or mounting of the trailer. Hence, this design is cost-efficient and convenient whilst providing an enhanced ventilation in the space.

According to some embodiments, the deflector member is configured to deflect the airflow entering the space towards a roof wall section of the cover structure.

An advantage with this design is that dirt, moisture and road salt contained in the airflow entering the space through the at least one inlet opening of the front wall section is deflected upwardly towards the roof wall section whilst colliding with the deflector member. Hence, dirt, moisture and road salt is at least partly adhered to the deflector member. The deflector member also facilitates in preventing dirt, moisture and road salt from contaminating a major portion of the space and the cargo. Thus, the deflector member facilitates in filtering the airflow.

According to some embodiments, the at least one inlet opening comprises an elongated opening extending in a direction parallel with the loading surface.

An advantage with this design is that an airflow entering the space through the at least one inlet opening of the front wall section is distributed evenly across the space making the ventilation efficient.

According to some embodiments, the airflow area of the at least one inlet opening is 0.05-0.5 m².

An advantage with this design is that an optimal overpressure is at least partly established and maintained.

The inlet opening is configured such that an overpressure is established in the space in response to moving the trailer in the travel direction.

According to some embodiments, at least a portion of the base structure and/or the cover structure is formed of a material with a high thermal conductivity.

An advantage with this design is that by at least a portion of the base structure and/or the cover structure being formed of a material with high thermal conductivity, heat emitted from a loaded cargo is dissipated efficiently. This decreases the risk for the formation of melt water from snow and ice present on the cargo loaded on the trailer, and thus also reduces the risk for the cover structure to freeze shut.

According to some embodiments, the base structure and/or the cover structure is provided with a plurality of ridges and/or recesses.

An advantage with this design is that by the base structure and/or the cover structure being provided with a plurality of ridges and/or recesses, the base structure and/or the cover structure is provided with an increased surface area. Therefore, heat from a loaded cargo is dissipated more efficiently.

Another advantage with this design is that the base structure and/or the cover structure is provided with further mechanical strength. The plurality of ridges and/or recesses facilitates in keeping the base structure and/or cover structure structurally sound to withstand rough weather conditions such as hailstorms or strong winds.

According to some embodiments, the deflector member has such an extension that all air entering the space via the at least one inlet opening is deflected in response to moving the trailer in the travel direction.

An advantage with this design is that by the deflector member deflecting all air entering the space via the at least one inlet opening it is provided that the airflow entering the space is fully utilized for the purpose of ventilating the space whilst ensuring that dirt, moisture and road salt is at least partly adhered to the deflector member.

According to some embodiments, the deflector member is provided with at least one inlet aperture.

An advantage with this design is that the at least one inlet aperture provided in the deflector member allows for an airflow that has entered the space via the at least one inlet opening of the front wall section to enter deeper into the space once deflected. The dimension of the at least one inlet aperture of the deflector member is designed so as to facilitate in blocking dirt, moisture and road salt contained in the airflow that has entered the space via the at least one inlet opening of the front wall section. Hence, it is facilitated that dirt, moisture and road salt collides with the deflector member. In other words, the at least one inlet aperture of the deflector member facilitates in preventing dirt, moisture and road salt from contaminating a major portion of the space and the cargo.

According to some embodiments, the deflector member has such an extension so as to allow the deflector member and a portion of the cover structure, to form a partly enclosed housing having a through-going airflow passage being defined by the at least one inlet opening of the front wall section and the at least one inlet aperture of the deflector member.

An advantage with this design is that an airflow is restricted to move merely along the through-going airflow passage. Hence, the extension of the deflector member prevents not properly filtered air to unintentionally flow through any gaps or openings or the like which would consequently contaminate a major portion of the space and the cargo.

According to some embodiments, at least a portion of the cover structure is provided with a heat dissipation member.

The heat dissipation member may extend along at least a portion of a circumferentielly extending lower portion of the cover structure and may be formed of a material with a thermal conductivity in the range of 200-300 W/ (m·K), such as aluminium.

It will be appreciated that the present invention is not limited to the embodiments shown.

The person skilled in the art realizes that the present invention by no means is limited to the preferred embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a schematic perspective view of a trailer according to some embodiments.
Fig. 2 is a schematic perspective view of a trailer according to some embodiments.
Fig. 3 is a schematic view of a cross-section of a trailer according to some embodiments with special focus on the deflector member.
Fig. 4 is a schematic view of a cross-section of a trailer according to some embodiments with special focus on the deflector member.

### Detailed description of preferred embodiments

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person.

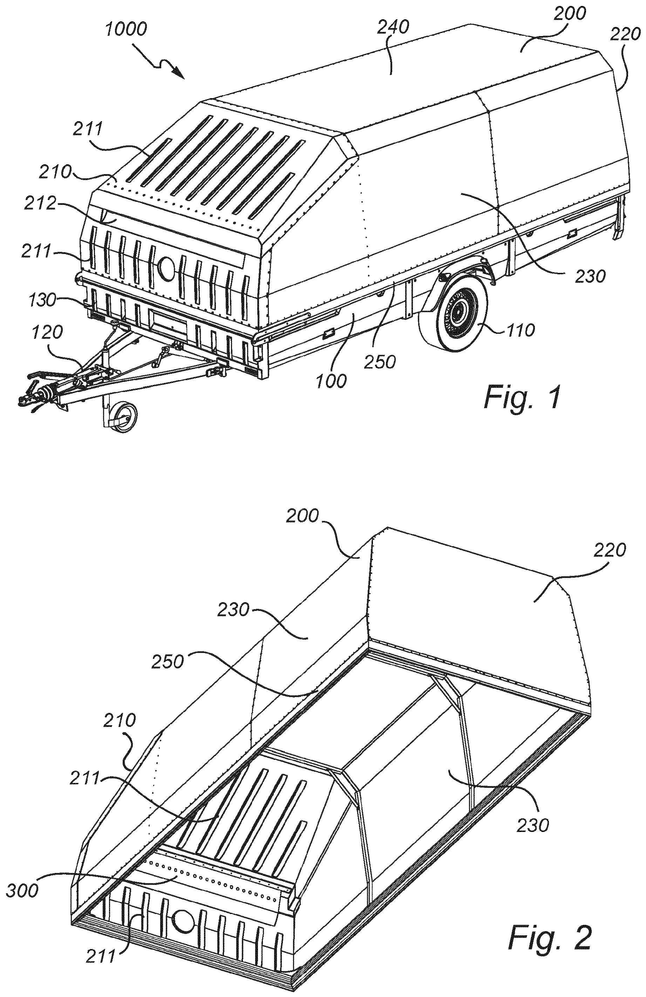

Fig. 1 illustrates a schematic perspective view of a trailer 1000 according to some embodiments. The trailer 1000 comprises a base structure 100 and a cover structure 200. The base structure 100 defines a loading surface. The loading surface is configured to support a cargo. By way of example, the cargo may comprise a vehicle, such as a car, a bike, a motorcycle or a snowmobile. Preferably, the trailer 1000 is configured to be transporting a snowmobile. The cover structure 200 defines a space above the loading surface. The cover structure 200 is configured to be pivotable connected to the base structure 100 thereby forming an enclosed trailer 1000.

The base structure 100 comprises a platform having a transversal and longitudinal extension. The base structure 100 is supported by a plurality of wheels 110. The disclosed embodiment of the base structure 100 is supported by two wheels 110. Each of the respective wheels 110 is located on a respective longitudinally extending side of the base structure 100. The base structure 100 is not limited to being supported by two wheels 110. Alternatively, the base structure 100 may be supported by any number of wheels 1100.

The base structure 100 may comprise a mounting system 120 configured to couple the trailer 1000 to a tow vehicle. The mounting system 120 may comprise a trailer coupler being configured to be coupled to a tow hitch of a tow vehicle. The mounting system 120 may further be supported by a wheel. The mounting system 120 may be attached to a transversally extending front side of the base structure 100. By transversally extending front side it is meant the side of the base structure 100 being configured to directly face a tow vehicle.

The base structure 100 may be formed of a material with high thermal conductivity. Preferably, the base structure 100 is formed of a material having a thermal conductivity between 10-1000 W/(m·K). By way of example, the base structure 100 may be formed of steel, aluminium, copper, polymer-based materials, carbon fibre, any alloys, or any composites.

The base structure 100 may be provided with a plurality of ridges and/or recesses 130. The ridges and/or recesses 130 are advantageous in that the base structure 100 is provided with an increased surface area. Therefore, heat emitted from a loaded cargo, such as a snowmobile, is dissipated more efficiently. This decreases the risk for the formation of melt water from snow or ice accumulated on the cargo before being loaded on the trailer 1000. The ridges and/or recesses 130 are further advantageous in that the base structure 100 is provided with further mechanical strength. The and/or recesses 130 facilitate in keeping the base structure 100 structurally sound to withstand rough weather conditions such as hailstorms or strong winds. The base structure 100 is not limited to being provided with any number of ridges and/or recesses 130. The plurality of ridges and/or recesses 130 may be integrally formed with the base structure 100. At least a portion of the base structure 100 may be formed of a material with high thermal conductivity. The ridges and/or recesses 130 provided on the base structure 100 may be arranged on the portion of the base structure 100 being formed of a material with high thermal conductivity.

Now turning to the cover structure 200. The cover structure 200 comprises a front wall section 210 facing an intended travel direction of the trailer 1000. By intended travel direction it is meant a direction in which the trailer 1000 is intended to move during transportation. The disclosed embodiment of the cover structure 200 also comprises a rear wall section 220, a plurality of side wall sections 230 and a roof section 240. The front wall section 210 and the rear wall section 220 are configured to be oppositely arranged. Preferably, the cover structure 200 comprises two side wall sections 230 being configured to be oppositely arranged and being substantially in parallel with each other. However it should be understood that the cover structure 200 is not being limited to having four wall sections. Preferably, the cover structure 200 comprises at least three wall sections. By way of example, the cover structure 200 may have e.g., 6, 8, 10 wall sections. It should be understood that the cover structure 200 may be constructed in a number of different ways with remained function. For instance, the cover structure 200 may be hemispherical.

As best seen in Fig. 2, the front wall section 210, the rear wall section 220, the side wall sections 230 and the roof section 240 of the cover structure 200 are connected so as to form a housing having an opening being defined by a free outer perimeter being defined by a respective free outer edge of each of the respective wall sections 210, 220, 230. The cover structure 200 is configured to be supported by the base structure 100. In other words, each respective free outer edge of each of the respective wall sections 210, 220, 230 defining the free outer perimeter of the opening is configured to be supported by the base structure 100 such that each respective free outer edge abuts the base structure 100. Hence, the cover structure 200 and the base structure 100 are configured to form an enclosed, or at least substantially enclosed, housing. By substantially it is meant that there may be gaps between the base structure 100 and the cover structure 200 and/or between wall sections of the cover structure 200.

The cover structure 200 defines a space above the loading surface thereby allowing a cargo to be housed within the enclosed housing being formed by the cover structure 200 and the base structure 100.

The cover structure 200 may be formed of plastic. Alternatively, the cover structure 200 may be formed of a metal, such as aluminium. Alternatively, different portions of the cover structure 200 may be formed of different materials. For example, the front wall section 210 may be formed of a metal while the rest of the cover structure 200 may be formed of plastic. Alternatively, the front wall section 210 may be formed of plastic while the rest of the cover structure 200 may be formed of a metal such as aluminium.

As illustrated in Fig. 1, the cover structure 200 is pivotable connected to the base structure 100 at a front portion of the base structure 100. Hence, this allows the cover structure 200 to be movably arranged between a transportation position in which the space is closed and a loading position in which access to the space is given. By transportation position it is meant a position where a major portion of the free outer perimeter of the opening abuts the base structure 100 hence forming an at least partly, preferably fully, enclosed housing hence limiting access to the space so as to prevent a cargo to be either loaded into or from the space. Further, by loading position it is meant a position where a major portion of the free outer perimeter of the opening has been released from the base structure 100 hence giving access to the space so as to allow a snowmobile to be either loaded into or from the space.

The front wall section 210, the rear wall section 220, the side wall sections 230 and the roof section 240 of the cover structure 200 may be integrally formed. However, the skilled person realizes that the front wall section 210, the rear wall section 220, the side wall sections 230 and the roof section 240 of the cover structure 200 may be formed in a number of different ways with remained function.

A ramp may be slidingly and/or pivotable connected to a transversally extending rear side portion of the base structure 100 and being configured to be movably arranged between the transportation position and the loading position. By the ramp being in the transportation position it is meant that the ramp is folded inwardly towards the space and/or kept in a position in which the ramp is hindered from being deployed. By the ramp being in the loading position it is meant that the ramp is folded away from the space and/or is deployed on ground level and further allows for a cargo to be easily and safely loaded from ground level to the space.

The ramp may e.g., be a drop-down ramp or a bi-fold ramp. The skilled person realizes that the ramp may be dimensioned and constructed in a number of different ways with remained function. The ramp is preferably, but not limited to, being formed of a metal.

The rear wall section 220 may not neccesarily be integrally formed with the front wall section 210, the side wall sections 230 and the roof section 240. The rear wall section 220 may instead be pivotable connected to a respective oppositely facing edge portion of a respective side wall section 230. Hence, the rear wall section 220 may be configured to form a ramp being movably arranged between the transportation position and the loading position. By the ramp being in the transportation position it is meant that the ramp is kept in a position in which the ramp is hindered from being deployed. By the ramp being in the loading position it is meant that the ramp is folded away from the space and is deployed on ground level and further allows for a cargo to be easily and safely loaded from ground level to the space.

The front wall section 210 may comprise a lower portion, an intermediate portion and a top portion. The portions may be angled in relation to each other so as to allow the trailer 1000 to be aerodynamically efficient.

The front wall section 210 may be formed of a material with high thermal conductivity. The front wall section 210 may be formed of a material having a thermal conductivity between 10-1000 W/(m·K). By way of example, the front wall section 210 may be formed of steel, aluminium, copper, polymer-based materials, carbon fibre, any alloys, or any composites. The front wall section 210 may be formed of a different material than the rest of the cover structure 200. Alternatively, at least a portion of the cover structure 200 may be formed of a material with high thermal conductivity. However, it should be understood that the front wall section 210 may alternatively be formed of a material having a low thermal conductivity such as plastic, while the rest of the cover structure 200 may be formed of a material having a high thermal conductivity such as aluminium.

The cover structure 200 may be provided with a plurality of ridges and/or recesses 211. Preferably, the front wall section 210 of the cover structure 200 is provided with a plurality of ridges and/or recesses 211. Any ridges and/or recesses 211 provided on the cover structure 200 are preferably arranged on the portion of the cover structure 200 being formed of a material with high thermal conductivity. The cover structure 200 is not limited to being provided with any number of ridges and/or recesses 211. The plurality of ridges and/or recesses 211 may be integrally formed with the cover structure 211. The ridges and/or recesses 211 are advantageous in that the cover structure 200 is provided with an increased surface area. Therefore, heat emitted from a loaded cargo, such as a snowmobile, is dissipated more efficiently. This decreases the risk for the formation of melt water from snow or ice accumulated on the cargo before being loaded on the trailer 1000. The ridges and/or recesses 211 are further advantageous in that the cover structure 200 is provided with further mechanical strength. The ridges and/or recesses 211 facilitate in keeping the cover structure 200 structurally sound to withstand rough weather conditions such as hailstorms or strong winds.

At least a portion of the cover structure 200 may be provided with a heat dissipation member 250. The heat dissipation member 250 may have a smooth or structured surface. The skilled person realizes that that the heat dissipation member 250 may be designed in a number of different ways so as to increase the surface area thereof for the purpose of facilitating dissipating heat from a loaded cargo more efficiently. The heat dissipation member 250 may be attached to the cover structure 200. The heat dissipation member 250 may extend along at least a portion of a circumferentielly extending lower edge portion of the cover structure 200. Alternatively, the heat dissipation member 250 may form part of at least a portion of the free outer perimeter being defined by a respective free outer edge of each of the respective wall sections 210, 220, 230 of the cover structure 200.

The heat dissipation member 250 may be formed of a material with high thermal conductivity. Preferably, the heat dissipation member 250 is formed of a material having a thermal conductivity between 200-300 W/(m·K). Preferably, the heat dissipation member 250 is formed of aluminium. Alternatively, the heat dissipation member 250 may be formed of a material with a thermal conductivity similar to that of aluminium. The heat dissipation member 250 may have a uniformly extending width.

As seen in Fig. 1, the front wall section 210 is provided with at least one inlet opening 212 forming an air inlet to the space. The at least one inlet opening 212 may differ in dimension and geometry. The at least one inlet opening 212 may be circular, rectangular, hexagonal or triangular. By way of example, a plurality of circular inlet openings 212 arranged one after another along a row may be arranged on the front wall section 210. Preferably, the at least one inlet opening 212 comprises an elongated opening extending in a direction parallel with the loading surface. The elongated opening may be centrally arranged along a transversal extension of the front wall section 210. The elongated opening may have a length in the range of 100-2000 mm. The elongated opening may have a width in the range of 10-300 mm.

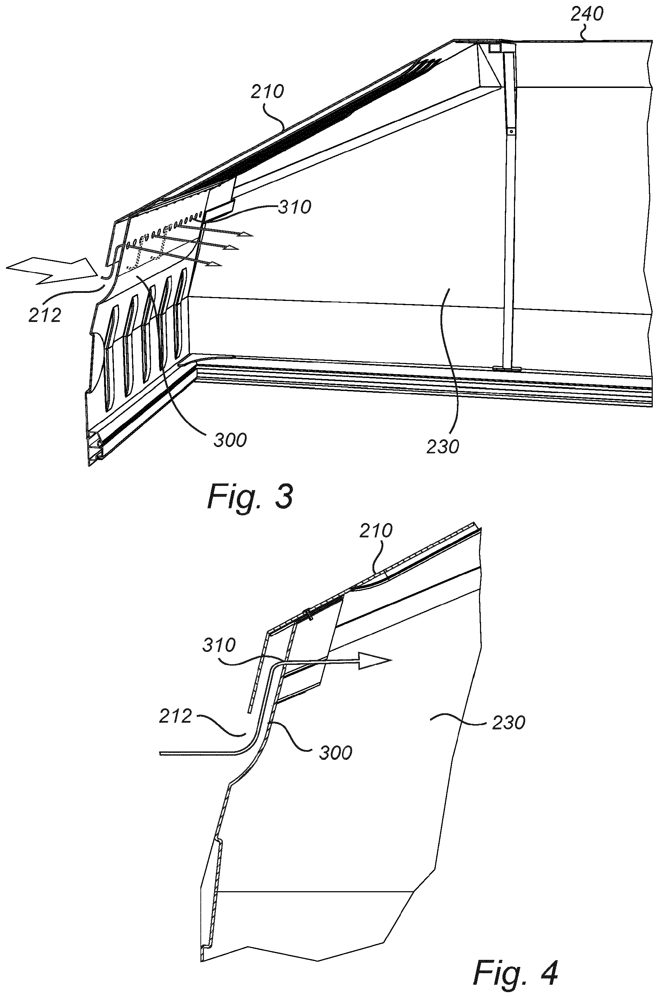

As best illustrated in Figs. 3-4, the front wall section 210 may comprise a deflector member 300. The deflector member 300 is mounted on an inside surface of the front wall section 210. The deflector member 300 is configured to deflect an airflow entering the space via the at least one inlet opening 212 in response to moving the trailer 1000 in the intended travel direction. The deflector member 300 may be provided with at least one inlet aperture 310. The at least one inlet aperture 310 may form an inlet allowing the deflected airflow to enter deeper into the space. The at least one inlet aperture 310 may differ in dimension and geometry. The at least one inlet aperture 310 may be circular, rectangular, hexagonal or triangular. By way of example, the at least one inlet aperture 310 may comprise an elongated opening extending in a direction parallel with the loading surface. Preferably, a plurality of circular inlet apertures 310 arranged one after another along a row is arranged on a top portion of the deflector member 300. The circular inlet apertures 310 forming the row may be arranged one after another along a transversal extension of the top portion of the deflector member 300. The circular inlet apertures 310 forming the row may be centrally arranged along a transversal extension of the top portion of the deflector member 300. The disclosed embodiment of the deflector member 300 comprises 28 circular inlet apertures 310 being arranged on after another along a row. Each of the 28 circular inlet apertures 310 has a diameter of 4 mm. It should be understood that the deflector member 300 is not limited to comprising 28 circular inlet apertures 310. Further, each of the inlet apertures 310 must not be 4 mm in diameter. The deflector member 300 may comprise any number of inlet apertures 310 varying in dimension and geometry.

The at least one inlet opening 212 may have an air flow area which is greater than an air flow area of the at least one inlet apertue 310 such that a restriction is formed for the airflow entering the space via the at least one inlet opening 212 in response to moving the trailer 1000 in the intended travel direction. The relationship between the air flow area of the at least one inlet apertue 310 and the air flow area of the at least one inlet opening 212 may be in the range of 1:20 and 1:5.

Each of the the at least one circular inlet aperture 310 may have an airflow area being in the range of approximately 0.0001-0.001 m². The deflector member 300 may have such an extension that all air entering the space via the at least one inlet opening 212 is deflected in response to moving the trailer 1000 in the travel direction. The deflector member 300 is mounted on an inside surface of the front wall section 210 such that a lower portion of the deflector member 300 abuts a lower edge portion of the at least one inlet opening 212 on the inside surface of the front wall section 210. The lower portion of the deflector member 300 may be angular. Preferably, the lower portion of the deflector member 300 is curved. This allows the lower portion of the deflector member 300 to efficiently deflect airflow entering the space towards a roof section of the cover structure 200.

The top portion of the deflection member 300 may be angular or curved. The top portion of the deflection member 300 is preferably flat. The top portion of the deflection member 300 may extend towards a top portion of the front wall section 210. Alternatively, the top portion of the deflection member 300 may extend towards the roof section 240. The top portion of the deflection member 300 may be attached to the top portion of the front wall section 210, alternatively the roof section 240, by e.g., a plurality of bolts being configured to be received in a plurality of through-going holes in the top portion of the deflection member 300. The lower portion of the deflection member 300 may be attached to a lower portion of the front wall section 210 by e.g., a plurality of bolts being configured to be received in a plurality of through-going holes in the lower portion of the deflection member 300. The skilled person realizes that the deflector member 300 may be attached to the front wall section 210, alternatively the roof section 240 or any other portions of the cover structure 200, in a number of different ways.

The deflector member 300 may further have such an extension so as to allow the deflector member 300 and a portion of the cover structure 200, preferably the portion of the cover structure 200 to which the deflector member 300 is attached, to form a partly enclosed housing having a through-going airflow passage being defined by the at least one inlet opening 212 of the front wall section 210 and the at least one inlet apertures 310 of the deflector member 300. By being a partly enclosed housing, it is meant that the through-going airflow passage may be the only passage air may flow through. In other words, the partly enclosed housing comprises no further gaps or openings or the like through which air may flow other than the through-going airflow passage. Hence, the extension of the deflector member 300 prevents not properly filtered air to unintentionally flow through any gaps or openings or the like which would consequently contaminate a major portion of the space and the cargo. By the front wall section 210 being formed of a mouldable material, it is facilitated to form a deflector member 300 as described above.

The inlet opening 212 of the front wall section 210 is configured such that an overpressure is established in the space in response to moving the trailer 1000 in the travel direction. The trailer 1000 may be provided with at least one outlet opening forming an air outlet from the space. The at least one air outlet may be formed by gaps between the base structure 100 and the cover structure 200 and/or between wall sections of the cover structure 200. The trailer 1000 may also be provided with an air outlet not being formed by gaps between the base structure 100 and the cover structure 200 and/or between wall sections of the cover structure 200.

By way of example, the front wall section 210, the rear wall section 220, the side wall sections 230 and the roof section 240 of the cover structure 200 may be formed such that when the trailer 1000 is arranged in the transportation position, a portion of the free outer perimeter of the opening defined by each respective free outer edge of each of the respective wall sections 210, 220, 230 is separated from the base structure 100. Thus, at least one gap forming at least one air outlet may be formed between the base structure 100 and the separated portion.

Alternatively or in combination with the aforementioned example, the rear wall section 220 may be pivotable connected to a respective oppositely facing edge portion of a respective side wall section 230 such that at least one gap forming at least one air outlet may be arranged between the rear wall section 220 and the respective oppositely facing edge portion of a respective side wall section 230 and/or an edge portion of the roof section 240.

Alternatively or in combination with the first example, a separate ramp may be slidingly and/or pivotable connected to a transversally extending rear side portion of the base structure 100 such that at least one gap forming at least one air outlet may be arranged between the ramp and the base structure 100.

The at least one outlet opening may have an airflow area which is smaller than an airflow area of the at least one inlet opening 212. Thus, an overpressure may be established in the space. The airflow area of the at least one inlet opening 212 may be 0.05-0.5 m². The skilled person realizes that the at least one inlet opening 212 and/or the at least one outlet opening may be dimensioned in a number of different ways in order to establish and maintain an overpressure in the space.

The person skilled in the art realizes that the present invention by no means is limited to the preferred embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, as long as they fall under the scope of the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A trailer (1000) for cargo transportation on road comprising:
a base structure (100) supported by wheels (110) and defining a loading surface,
a cover structure (200) supported by the base structure (100) and defining a space above the loading surface,
wherein the cover structure (200) comprises a front wall section (210) facing an intended travel direction of the trailer (1000),
wherein the front wall section (210) is provided with at least one inlet opening (212) forming an air inlet to the space,
wherein a deflector member (300) is mounted on an inside surface of the front wall section (210), the deflector member (300) being configured to deflect an airflow entering the space via the at least one inlet opening (212) in response to moving the trailer (1000) in the intended travel direction,
wherein the trailer (1000) is provided with at least one outlet opening forming an air outlet from the space the trailer being **characterised in that** said at least one outlet opening has an airflow area which is smaller than an airflow area of the at least one inlet opening (212), and
wherein the inlet opening (212) is configured such that an overpressure is established in the space in response to moving the trailer (1000) in the travel direction.

2. The trailer (1000) according to claim 1, further comprising a rear section being pivotable connected to the base structure (100), the rear section being movably arranged between a transportation position and a loading position in which the rear section forms a ramp giving access to the space.

3. The trailer (1000) according to claim 2 wherein the at least one air outlet is formed by gaps between the base structure (100) and the cover structure (200) and/or between wall sections of the cover structure (200).

4. The trailer (1000) according to any one of the preceding claims wherein the deflector member (300) is configured to deflect the airflow entering the space towards a roof section (240) of the cover structure (200).

5. The trailer (1000) according to any one of the preceding claims wherein the at least one inlet opening (212) comprises an elongated opening extending in a direction parallel with the loading surface.

6. The trailer (1000) according to any one of the preceding claims wherein the at least one inlet opening (212) has an air flow area in the range of 0.05-0.5 m².

7. The trailer (1000) according to any one of the preceding claims wherein at least a portion of the base structure (100) and/or the cover structure (200) is formed of a material with a high thermal conductivity.

8. The trailer (1000) according to any one of the preceding claims wherein the deflector member (300) has such an extension that all air entering the space via the at least one inlet opening (212) is deflected in response to moving the trailer (1000) in the travel direction.

9. The trailer (1000) according to any one of the preceding claims wherein the deflector member (300) is provided with at least one inlet aperture (310).

10. The trailer (1000) according to claim 9 wherein the deflector member (300) has such an extension so as to allow the deflector member (300) and a portion of the cover structure (200), to form a partly enclosed housing having a through-going airflow passage being defined by the at least one inlet opening (212) of the front wall section (210) and the at least one inlet aperture (310) of the deflector member (300).

11. The trailer (1000) according to any one of the precedings claims wherein at least a portion of the cover structure (200) is provided with a heat dissipation member (250).

12. The trailer (100) according to claim 12, wherein the heat dissipation member (250) extends along at least a portion of a circumferentielly extending lower portion of the cover structure (200).

13. The trailer (100) according to claim 11 or 12, wherein the heat dissipation (250) member is formed of a material with a thermal conductivity in the range of 200-300 W/ (m·K).

## Patentansprüche

1. Anhänger (1000) für den Frachttransport auf der Straße, umfassend:
eine Grundstruktur (100), die von Rädern (110) getragen wird und eine Ladefläche definiert,
eine Abdeckungsstruktur (200), die von der Grundstruktur (100) getragen wird und einen Raum über der Ladefläche definiert;
wobei die Abdeckungsstruktur (200) einen vorderen Wandabschnitt (210) umfasst, der einer vorgesehenen Fahrtrichtung des Anhängers (1000) zugewandt ist,
wobei der vordere Wandabschnitt (210) mit mindestens einer Einlassöffnung (212) versehen ist, die einen Lufteinlass in den Raum bildet,
wobei ein Ablenkelement (300) auf einer Innenfläche des vorderen Wandabschnitts (210) montiert ist, wobei das Ablenkelement (300) dazu ausgelegt ist, einen Luftstrom abzulenken, der als Reaktion auf die Bewegung des Anhängers (1000) in die vorgesehene Fahrtrichtung über die mindestens eine Einlassöffnung (212) in den Raum eintritt,
wobei der Anhänger (1000) mit mindestens einer Auslassöffnung versehen ist, die einen Luftauslass aus dem Raum bildet, wobei der Anhänger **dadurch gekennzeichnet ist, dass** die mindestens eine Auslassöffnung einen Luftstrombereich aufweist, der kleiner ist als der Luftstrombereich der mindestens eine Einlassöffnung (212), und
wobei die Einlassöffnung (212) so ausgelegt ist, dass als Reaktion auf die Bewegung des Anhängers (1000) in die vorgesehene Fahrtrichtung ein Überdruck im Raum entsteht.

2. Anhänger (1000) nach Anspruch 1, der ferner einen hinteren Abschnitt umfasst, der schwenkbar ist und mit der Grundstruktur (100) verbunden ist, wobei der hintere Abschnitt beweglich zwischen einer Transportposition und einer Ladeposition angeordnet ist, in der der hintere Abschnitt eine Rampe bildet, die den Zugang zum Raum ermöglicht.

3. Anhänger (1000) nach Anspruch 2, wobei der mindestens ein Luftauslass durch Lücken zwischen der Grundstruktur (100) und der Abdeckungsstruktur (200) und/oder zwischen Wandabschnitten der Abdeckungsstruktur (200) gebildet ist.

4. Anhänger (1000) nach einem der vorhergehenden Ansprüche, wobei das Ablenkelement (300) dazu ausgelegt ist, den in den Raum eintretenden Luftstrom zu einem Dachabschnitt (240) der Abdeckungsstruktur (200) abzulenken.

5. Anhänger (1000) nach einem der vorhergehenden Ansprüche, wobei die mindestens eine Einlassöffnung (212) eine längliche Öffnung umfasst, die sich in einer Richtung parallel zur Ladefläche erstreckt.

6. Anhänger (1000) nach einem der vorhergehenden Ansprüche, wobei die mindestens eine Einlassöffnung (212) einen Luftstrombereich im Bereich von 0,05-0,5 m² aufweist.

7. Anhänger (1000) nach einem der vorhergehenden Ansprüche, wobei mindestens ein Teil der Grundstruktur (100) und/oder der Abdeckungsstruktur (200) aus einem Material mit hoher Wärmeleitfähigkeit gebildet ist.

8. Anhänger (1000) nach einem der vorhergehenden Ansprüche, wobei das Ablenkelement (300) eine solche Verlängerung aufweist, dass die gesamte Luft, die über die mindestens eine Einlassöffnung (212) in den Raum eintritt, als Reaktion auf die Bewegung des Anhängers (1000) in die vorgesehene Fahrtrichtung abgelenkt wird.

9. Anhänger (1000) nach einem der vorhergehenden Ansprüche, wobei das Ablenkelement (300) mit mindestens einer Einlassöffnung (310) versehen ist.

10. Anhänger (1000) nach Anspruch 9, wobei das Ablenkelement (300) eine solche Verlängerung aufweist, um es dem Ablenkelement (300) und einem Teil der Abdeckungsstruktur (200) zu ermöglichen, ein teilgeschlossenes Gehäuse mit einem durchgehenden Luftstromkanal zu bilden, der durch die mindestens eine Einlassöffnung (212) des vorderen Wandabschnitts (210) und die mindestens eine Einlassöffnung (310) des Ablenkelements (300) definiert ist.

11. Anhänger (1000) nach einem der vorhergehenden Ansprüche, wobei zumindest ein Abschnitt der Abdeckungsstruktur (200) mit einem Wärmeableitungselement (250) versehen ist.

12. Anhänger (100) nach Anspruch 12, wobei sich das Wärmeableitungselement (250) zumindest entlang eines Abschnitts eines umlaufend verlaufenden unteren Abschnitts der Abdeckungsstruktur (200) erstreckt.

13. Anhänger (100) nach Anspruch 11 oder 12, wobei das Wärmeableitungselement (250) aus einem Material mit einer Wärmeleitfähigkeit im Bereich von 200-300 W/(m·K) gebildet ist.

## Revendications

1. Remorque (1000) pour le transport de marchandises sur route comprenant :
une structure de base (100) supportée par des roues (110) et définissant une surface de chargement,
une structure de couverture (200) supportée par la structure de base (100) et définissant un espace au-dessus de la surface de chargement,
la structure de couverture (200) comprenant une section de paroi avant (210) faisant face à une direction de déplacement prévue de la remorque (1000),
la section de paroi avant (210) étant pourvue d'au moins une ouverture d'entrée (212) formant une entrée d'air vers l'espace,
un élément déflecteur (300) étant monté sur une surface intérieure de la section de paroi avant (210), l'élément déflecteur (300) étant conçu pour dévier un flux d'air pénétrant dans l'espace par l'au moins une ouverture d'entrée (212) en réponse au déplacement de la remorque (1000) dans la direction de déplacement prévue,
la remorque (1000) étant pourvue d'au moins une ouverture de sortie formant une sortie d'air depuis l'espace, la remorque étant **caractérisée en ce que** ladite au moins une ouverture de sortie a une zone d'écoulement d'air qui est plus petite qu'une zone d'écoulement d'air de l'au moins une ouverture d'entrée (212), et
l'ouverture d'entrée (212) étant conçue de sorte qu'une surpression est établie dans l'espace en réponse au déplacement de la remorque (1000) dans la direction de déplacement.

2. Remorque (1000) selon la revendication 1, comprenant en outre une section arrière reliée de manière pivotante à la structure de base (100), la section arrière étant disposée de manière mobile entre une position de transport et une position de chargement dans laquelle la section arrière forme une rampe donnant accès à l'espace.

3. Remorque (1000) selon la revendication 2, l'au moins une sortie d'air étant formée par des intervalles entre la structure de base (100) et la structure de couverture (200) et/ou entre des sections de paroi de la structure de couverture (200).

4. Remorque (1000) selon l'une quelconque des revendications précédentes, l'élément déflecteur (300) étant conçu pour dévier le flux d'air entrant dans l'espace vers une section de toit (240) de la structure de couverture (200).

5. Remorque (1000) selon l'une quelconque des revendications précédentes, l'au moins une ouverture d'entrée (212) comprenant une ouverture allongée s'étendant dans une direction parallèle à la surface de chargement.

6. Remorque (1000) selon l'une quelconque des revendications précédentes, l'au moins une ouverture d'entrée (212) présentant une superficie d'écoulement d'air dans la plage comprise entre 0,05 et 0,5 m².

7. Remorque (1000) selon l'une quelconque des revendications précédentes, au moins une partie de la structure de base (100) et/ou de la structure de couverture (200) étant formée d'un matériau présentant une conductivité thermique élevée.

8. Remorque (1000) selon l'une quelconque des revendications précédentes, l'élément déflecteur (300) comprenant une extension telle que tout l'air entrant dans l'espace par l'intermédiaire de l'au moins une ouverture d'entrée (212) est dévié en réponse au déplacement de la remorque (1000) dans la direction de déplacement.

9. Remorque (1000) selon l'une quelconque des revendications précédentes, l'élément déflecteur (300) étant pourvu d'au moins une ouverture d'entrée (310).

10. Remorque (1000) selon la revendication 9, l'élément déflecteur (300) comprenant une extension telle qu'elle permet à l'élément déflecteur (300) et à une partie de la structure de couvercle (200) de former un logement partiellement fermé ayant un passage d'écoulement d'air traversant défini par l'au moins une ouverture d'entrée (212) de la section de paroi avant (210) et l'au moins une ouverture d'entrée (310) de l'élément déflecteur (300).

11. Remorque (1000) selon l'une quelconque des revendications précédentes, au moins une partie de la structure de couverture (200) étant pourvue d'un élément de dissipation de chaleur (250).

12. Remorque (100) selon la revendication 12, l'élément de dissipation de chaleur (250) s'étendant le long d'au moins une partie d'une partie inférieure s'étendant circonférentiellement de la structure de couverture (200).

13. Remorque (100) selon la revendication 11 ou 12, l'élément de dissipation de chaleur (250) étant formé d'un matériau présentant une conductivité thermique dans la plage comprise entre 200 et 300 W/(m·K).
